# EUROPÄISCHE PATENTSCHRIFT

(11) **EP 1 268 160 B1**
(45) Veröffentlichungstag und Bekanntmachung des Hinweises auf die Patenterteilung: **08.09.2004**
(21) Anmeldenummer: 01936072.6
(22) Anmeldetag: 14.03.2001
(51) Int. Cl.: B29C 49/22, B65D 1/02

(54) **VERFAHREN ZUM HERSTELLEN EINES MIT EINER DRUCKAUSGLEICHSÖFFNUNG VERSEHENEN BEHÄLTERS UND NACH DIESEM VERFAHREN HERGESTELLTER BEHÄLTER**
METHOD FOR PRODUCING A CONTAINER HAVING A PRESSURE COMPENSATION OPENING, AND CONTAINER PRODUCED ACCORDING TO SAID METHOD
PROCEDE POUR REALISER UN CONTENANT POURVU D'UNE OUVERTURE D'EQUILIBRAGE DE PRESSION, ET CONTENANT REALISE SELON CE PROCEDE

(30) Priorität: 07.04.2000 DE 10017443
(43) Veröffentlichungstag der Anmeldung: 02.01.2003
(73) Patentinhaber: Boehringer Ingelheim Pharma GmbH & Co.KG, 55218 Ingelheim am Rhein (DE)
(72) Erfinder: KUEHN, Torsten, 55218 Ingelheim (DE); METZGER, Burkhard, Peter, 55218 Ingelheim (DE)
(74) Vertreter: Fuchs Mehler Weiss & Fritzsche
(86) Internationale Anmeldenummer: PCT/EP2001/002849
(87) Internationale Veröffentlichungsnummer: WO 2001/076849

(56) Entgegenhaltungen:
- EP-A- 0 182 094
- US-A- 5 921 438
- PATENT ABSTRACTS OF JAPAN vol. 1999, no. 09, 30. Juli 1999 (1999-07-30) & JP 11 115077 A (OWENS BROCKWAY PLASTIC PROD INC), 27. April 1999 (1999-04-27) & US 6 083 450 A (SAFIAN JOHN W) 4. Juli 2000 (2000-07-04)
- PATENT ABSTRACTS OF JAPAN vol. 2000, no. 01, 31. Januar 2000 (2000-01-31) & JP 11 268720 A (YOSHINO KOGYOSHO CO LTD), 5. Oktober 1999 (1999-10-05)

## Beschreibung

Die Erfindung betrifft ein Verfahren zur Herstellung eines mit einer Behälteröffnung versehenen Behälters mit einem im wesentlichen formsteifen Außenbehälter und einem in diesem angeordneten, mit dem späteren Behälterinhalt in Kontakt befindlichen Innenbeutel aus jeweils verschiedenartigen, keine Verbindung miteinander eingehenden, thermoplastischen Kunststoffen, und einer einen zwischen Außenbehälter und Innenbeutel bestehenden Druckunterschied ausgleichenden und in dem Außenbehälter angeordneten Druckausgleichsöffnung, wobei zunächst ein Vorformling, bestehend aus zwei koaxialen Schläuchen, die eine für die Herstellung des Behälters ausreichenden Länge aufweisen, im Koextcusionsblasverfahren zwischen den geöffneten Hälften der Blasform erzeugt wird, die Blasform geschlossen wird und dabei unter Ausbildung einer nach außen hervorstehenden Bodennaht das Überschußmaterial im Bodenbereich des herzustellenden Behälters abgequetscht wird, in der Art, daß im Nahtbereich das in Kontakt befindliche Material des Außenbehälters miteinander verschweißt wird, daß zwischen den Wandabschnitten des Außenbehälters der den Innenbeutel bildende Schlauch eingeklemmt, axial fixiert und verschweißt wird, und der Innenbeutel so mit Druck beaufschlagt wird, daß der Vorformling sich mit seinen Wandungen von innen an die Kontur der Blasform anlegt.

Ferner betrifft die Erfindung einen vorzugsweise nach dem Verfahren hergestellten Behälter mit einer Behälteröffnung im wesentlichen bestehend aus einem formsteifen Außenbehälter und einem in diesem angeordneten, mit dem späteren Behälterinhalt in Kontakt befindlichen Innenbeutel.

Ein Verfahren der betrachteten Art ist in der WO 99/11451 offenbart. Das kennzeichnende Merkmal dieses Verfahrens ist, daß die Druckausgleichsöffnung, durch die der zwischen Außenbehälter und Innenbeutel bestehenden Druckunterschied ausgleichen wird, als vorzugsweise linsen- oder ellipsenförmiges Loch im Außenbehälter ausgebildet wird, wobei dieses Loch nach Beendigung des eigentlichen Formgebungsprozesses mit Hilfe eines Schneidwerkzeuges durch Wegschneiden eines Wandabschnittes des Außenbehälters entsteht.

Diese bedeutet, daß die Außenwand, an der der sehr dünne, flexible Innenbeutel anliegt, zumindest in einem sehr kleinen Bereich vollständig weggeschnitten werden muß, ohne daß hierbei der Innenbeutel verletzt werden darf. Die so durchzuführende Bearbeitung des Außenbehälters impliziert unabdingbar einen Kontakt zwischen Schneidwerkzeug und Innenbeutel. Die mit Abstand wichtigsten Qualitätsmerkmale des Verfahrens und des nach dem Verfahren hergestellten Behälters können nicht gleichzeitig in gleich hohem Maße realisiert werden. Sie divergieren bei dem vorliegenden Verfahren bzw. Behälter. Zum einen muß der Druckausgleich zwischen dem Außenbehälter und dem Innenbeutel, der durch die mit der Abgabe des Behälterinhalts verbundene Volumenverringerung des Innenbeutels erforderlich wird, erfolgen können. Zum anderen muß der Behälter vollständig dicht sein, d.h. eine Beschädigung des Innenbeutels ist unter allen Umständen zu vermeiden, weil sonst der Behälter unbrauchbar wird. Die Schwierigkeit beide Aufgaben befriedigend zu erfüllen, werden in der WO 99/11451 aufgegriffen. So wird beispielsweise dargelegt, daß aufgrund der auftretenden fertigungsbedingten Wandstärketoleranzen des Außenbehälters, dessen Wandstärke zwischen 1 und 1,5 mm differieren kann, die Schnittiefe in der Praxis so festgelegt werden muß, daß gewährleistet ist, daß durch den Schneidvorgang tatsächlich ein durch den Außenbehälter hindurchführendes Loch entsteht. Eine Beschädigung des Innenbeutels kann nicht in jedem Fall ausgeschlossen werden. Aus diesem Grund werden in der WO 99/11451 bevorzugte Verfahrensschritte und zu verwendende Werkzeuge beschrieben, um die Gefahr einer Beschädigung des Innenbeutels zu minimieren.

Ein weiterer Nachteil des offenbarten Verfahrens ist, dass die Ausbildung der Druckausgleichsöffnung nicht direkt im Anschluss an den Formgebungsprozess erfolgt. Der Verfahrensschritt des Schneidens kann nicht auf der Kunststoffblasmaschine und insbesondere nicht auf der Kunststoffblasmaschine bei geschlossener Blasform erfolgen. Die für den vorgeschlagenen Schneidvorgang erforderliche zusätzliche Bearbeitungsmaschine bzw. ihre Werkzeuge und die durch den speziellen Schneidvorgang notwendig gewordenen Arbeitsschritte führen zu einer Steigerung der Kosten und einer Senkung der Produktivität.

Desweiteren kann es gewünscht sein, an der Behälteröffnung des Behälters der betrachteten Art eine Pumpe bzw. einen Zerstäuber anzuschließen, mit dem das im Innenbeutel befindliche Füllgut aus dem Behälter heraus befördert bzw. dosiert wird. Abhängig von der bestimmten Ausführungsform der verwendeten Pumpe bzw. des verwendeten Zerstäubers kann es zu einem teilweisen oder vollständigen Verschließen der Druckausgleichsöffnung durch den adaptierten Zerstäuber bzw. die adaptierte Pumpe kommen. Anders gesagt, kann an dem.hier betrachteten Behälter nicht jeder beliebige Au adaptiert werden, sondern es muss auf die spezielle Lage der Druckausgleichsöffnung des jeweiligen Au Rücksicht genommen werden. Als in dieser Hinsicht für die Lage der Wandöffnung besonders ungünstig zu nennen sind Lagen im Schulterbereich und im Bereich der Behältermantelfläche. Der für die Wandöffnung geeignetste Behälterbereich, der Behälterboden ist ausdrücklich nicht genannt.

Aus der EP-A-182 094 ist ein Verfahren bekannt geworden, welches über das zuvor beschriebene Verfahren hinausgeht. Gemäß dieser Druckschrift erfolgt nämlich die Herstellung der Belüftungsöffnung ohne Schneidwerkzeug. Die Belüftungsöffnung wird entweder durch Wärmeschrumpf oder aber durch das Öffnen des Blasformwerkzeuges hergestellt. Auch dies bedeutet wiederum zusätzliche Arbeitsschritte und dadurch eine Senkung der Produktivität.

Vor diesem Hintergrund ist es Aufgabe der vorliegenden Erfindung, ein Verfahren vorzustellen, mit dem eine im Außenbehälter des Behälters der betrachteten Art angeordnete Druckausgleichsöffnung ausgebildet werden kann, ohne die Dichtigkeit des Behälters zu gefährden, wobei das Verfahren nur ein Minimum an Verfahrensschritten aufweisen soll und im Vergleich zu den nach dem Stand der Technik verwendeten Verfahren weniger Kosten verursacht und gleichzeitig eine geringere Ausschußrate bzw. eine höhere Produktivität ermöglicht.

Außerdem soll ein Behälter vorgestellt werden, der eine Druckausgleichsöffnung in seinem Außenbehälter aufweist, ohne daß sein Innenbeutel beim Schneiden dieser Öffnung beschädigt wurde, und der keine der sonst genannten Nachteile mit sich bringt.

Gelöst wird die Verfahrensaufgabe durch das erfindungsgemäße Verfahren, bei dem beim Schließen der Blasform und der damit verbundenen Ausbildung der Bodennaht die Naht des Innenbeutels axial in der Naht des Außenbehälters zumindest in Teilbereichen fixiert wird und mindestens eine Druckausgleichsöffnung dadurch ausgebildet wird, daß die Bodennaht im Anschluß an die Formgebung mindestens teilweise, bevorzugt jedoch nicht vollständig abgeschnitten wird, so daß wenigstens ein Teilbereich der Naht des Innenbeutels in der Naht des Außenbehälters fixiert bleibt, und anschließend eine radiale, in Nahtrichtung wirkende Kraft im Bodenbereich eingeleitet wird, in der Art, daß die Bodennaht aufbricht, wobei die Temperatur des Vorformlings beim Abschneiden der Bodennaht zwischen 40° C und 70° C liegt und der Außenbehälter noch in gewissem Umfang plastisch verformbar ist, so daß die durch die Kraft verursachte Verformung eine bleibende Verformung ist und nicht durch elastische Rückstellung aufgehoben wird.

Die aus verschiedenen, thermoplastischen Kunststoffen bestehenden Wände des Innenbeutels und Außenbehälters gehen im allgemeinen keine Schweißverbindung miteinander ein. Unter der beim Abquetschen des Überschußmaterials durch die Blasformhälften eingeleiteten Kraft werden einerseits die Wandungen des Innenbeutels und andererseits die Wandungen des Außenbehälters jeweils miteinander verschweißt. Zusätzlich kommt es in Bereichen der Bodennaht zu einer Adhäsion zwischen den Wandungen von Innenbeutel und Außenbehälter. Dies ist ein wesentlicher Vorteil des Verfahrens im Hinblick auf die Fixierung des Innenbeutels im Bodenbereich. Dabei ist die Adhäsion derart, daß mit dem Aufbrechen der Bodennaht des Außenbehälters eine der beiden Nahtseiten mit der Naht des Innenbeutels verbunden bleibt, während die andere Nahtseite des Außenbehälters nicht mit der Naht des Innenbeutels fixiert bleibt. Dadurch wird trotz des Aufbrechens die axiale Fixierung des Innenbehälters gewährleistet, selbst in Ausführungsformen, bei denen die Naht des Außenbehälters über die gesamte Länge aufgebrochen wird. Eine Fixierung des Innenbeutels ist von besonderer Bedeutung in den Anwendungsfällen, in denen eine Kanüle in den Behälter eingeführt wird und ein Ablösen des Innenbeutels vom Bodenbereich zu einer Beschädigung bzw. zu einem Verstopfen der Kanüle führen würde. Eine Beschädigung des Innenbeutels ist bei dem erfindungsgemäßen Verfahren ausgeschlossen, da die Bodennaht nur teilweise abgeschnitten wird und somit der Innenbeutel auch nach Durchführung des Schneidvorganges durch die verbleibende Innenbeutelschweißnaht fest verschlossen ist. Im Gegensatz zu Verfahren nach dem Stand der Technik wird die Ausbildung der Druckausgleichsöffnung nicht direkt durch den Schneidvorgang erzeugt, sondern durch Einleiten der Kraft und Aufbrechen der Naht. Die Ausschußrate wird minimiert.

Vorteilhaft sind Varianten des Verfahrens, bei denen nach dem zumindest teilweise Abschneiden der Bodennaht und vor dem Einleiten der radialen Kraft kurzzeitig eine axiale, im wesentlichen zur Längsachse des Behälters parallel wirkende Kraft eingeleitet wird, in der Art, daß die Bodennaht zumindest teilweise aufbricht.

Die axial eingeleitete Kraft dient vorwiegend dem Aufbrechen der Bodennaht, während die Wirkung bzw. der Nutzen der radial eingeleiteten Kraft vorwiegend in der bleibenden Verformung der Bodennaht zu sehen ist. Ungeachtet dessen sind beide Kräfte sowohl an einer Deformation des Behälters, insbesondere des Bodenbereiches, als auch am Aufbrechvorgang beteiligt, wobei einmal das. Aufbrechen und einmal das Verformen im Vordergrund steht.

Vorzuziehen sind Verfahren, die dadurch gekennzeichnet sind, daß die axiale Kraft in Form eines Stoßes eingeleitet wird.

Günstig sind Verfahrenvarianten, bei denen die Herstellung des Behälters ohne Ausbildung einer Schulternaht in Form einer Quetschnaht erfolgt.

Vorzugsweise wird das Verfahren in der Art durchgeführt, daß beim Aufbrechen der Bodennaht das den Innenbeutel bildende Material auf einer Seite der Bodennaht an dem Außenbehälter und den Enden der Bodennaht haften bleibt, wodurch eine axiale Fixierung aufrechterhalten wird. Die Druckausgleichsöffnung zwischen Innenbeutel und Außenbehälter ist in diesem Fall auf der gegenüberliegenden Seite der Bodennaht angeordnet.

Günstig ist ein Verfahren, bei dem die Bodennaht des Außenbehälters nur teilweise aufgebrochen wird und die Naht des Innenbeutels durch den nicht aufgebrochenen Teil der Bodennaht des Außenbehälters fixiert ist.

In einem bevorzugten Verfahren geschieht das Abschneiden der Bodennaht und das Einleiten der den Außenbehälter öffnenden und bleibend verformenden Kraft gleichzeitig in einem Arbeitsgang. Dies kann dadurch umgesetzt werden, daß ein Schneidwerkzeug und ein Werkzeug zum Aufbrechen der Naht aufeinander abgestimmt und nahezu gleichzeitig in einem Verfahrensschritt arbeiten. Besonders effektiv ist eine Verfahrensvariante, bei der das Abschneiden der Bodennaht und das Einleiten der den Außenbehälter öffnenden und bleibend verformenden Kraft nicht nur gleichzeitig in einem Arbeitsgang, sondern auch von einem Werkzeug, in diesem Fall vom Schneidewerkzeug, realisiert wird.

Es ist sinnvoll, daß das Abschneiden der Bodennaht und das Einleiten der den Außenbehälter öffnenden und bleibend verformenden Kraft getrennt in separaten, dicht aufeinanderfolgenden Arbeitsgängen geschieht. Die Größe der zu fertigenden Behälter kann ein Entscheidungskriterium für die eine oder andere Variante sein.

Empfehlenswert ist eine Verfahrenvariante, bei der das Abschneiden der Bodennaht und das Einleiten der den Außenbehälter öffnenden und bleibend verformenden Kraft in der Kunststoffblasmaschine erfolgt, insbesondere wenn der Behälter sich noch innerhalb der geschlossenen Blasform befindet. Dadurch wird der während des Schneidvorganges 40 bis 70 °C warme Behälter stabilisiert. Ein grundsätzlicher Vorteil ist die Minimierung der Bearbeitungsmaschinen bzw.- vorrichtungen und das Entfallen von zusätzlichen Arbeitsschritten. Hierdurch werden die Kosten gesenkt und die Produktivität gesteigert.

Wiederum kann es aber in Einzelfällen sinnvoll sein, daß das Abschneiden der Bodennaht und das Einleiten der den Außenbehälter öffnenden und bleibend verformenden Kraft auf einer sich der Kunststoffblasmaschine anschließenden Maschine erfolgt. Dies liegt auch im Rahmen der Erfindung.

In den überwiegenden Fällen handelt es sich um Verfahren, bei dem der Behälter flaschenförmig ausgebildet wird und der Innenbeutel zusätzlich zur Fixierung im Bodenbereich auch im Bereich des Flaschenhalses fixiert wird. Hier sind als besonders günstig Verfahren zu nennen, bei denen der Innenbeutel bei Ausbildung des Flaschenhalses zumindestens teilweise in den Wandungen des Außenbehälters eingeklemmt wird. Dies kann während des Verfahrensablaufes leicht realisiert werden. Wenn der Durchmesser des Vorformlings im Bereich des zukünftigen Flaschenhalses größer ist als der entsprechende Durchmesser der Blasform, kommt es beim Schließen der Blasform zu einem Abquetschen des Überschußmaterials und Ausbildung einer Schweißnaht am Innenbeutel bzw. einer Fixierung des Innenbeutels am Außenbehälter.

Das Verfahren kann durch Verwendung einer entsprechenden Blasform so ausgelegt werden, daß der Flaschenhals mit einem an seiner Stirnseite nach außen in radiale Richtung hervorragenden Vorsprung ausgebildet wird. Dies kann erforderlich werden, wenn in einem späteren Prozeß der Behälter mit einer Pumpe bzw. einem Zerstäuber, der vorzugsweise am Flaschenhals adaptiert wird, versehen werden soll.

In diesem Fall kann der Innenbeutel im Bereich des Vorsprunges durch einen Teil einer stehenden oder liegenden Falz mit dem Außenbehälter verbunden werden und somit seine zusätzliche Fixierung erhalten.

Vorteilhaft sind Verfahrensvarianten, bei denen der Vorsprung ausschließlich aus Material des Außenbehälters geformt ist.

Entsprechend dem beschriebenen Verfahren ist bei dem erfindungsgemäßen Behälter mindestens eine Druckausgleichsöffnung im Bodenbereich angeordnet und durch Abschneiden, Aufbrechen und Verformen der Bodennaht entstanden, wobei der Innenbeutel auf einer Seite der Bodennaht am Außenbehälter und den Enden der Bodennaht haften bleibt und dadurch axial fixiert ist.

Vorteilhafte Ausführungsformen des Behälters beinhalten, daß der Behälter flaschenförmig ausgebildet ist und der Flaschenhals einen an seiner Stirnseite nach außen in radiale Richtung hervorragenden Vorsprung aufweist, der für die Adaption einer Pumpe bzw. eines Zerstäubers erforderlich werden kann. Aber auch die zusätzliche Fixierung im Bereich des Flaschenhalses und seine Ausführungen entsprechend den Ansprüchen 21 und 23 sind Teil der Erfindung. Ebenso das Merkmal, nach dem der Vorsprung ausschließlich aus Material des Außenbehälters geformt ist.

Die Erfindung wird im folgenden anhand verschiedener Zeichnungsfiguren ergänzend erläutert. Hierbei zeigen:
- Figur 1: Schnitt in Richtung der Behältermittelachse durch ein erstes Ausführungsbeispiel des Behälters,
- Figur 2: Schnitt in Richtung der Behältermittelachse durch den Flaschenhals eines zweiten Ausführungsbeispieles des Behälters,
- Figur 3: Schnitt in Richtung der Behältermittelachse durch den Bodenbereich, vor dem Verfahrensschritt des Schneidens,
- Figur 4: Schnitt in Richtung der Behältermittelachse durch den Bodenbereich, nach dem Verfahrensschritt des Schneidens,
- Figur 5: Ansicht des Behälterbodens in Richtung der Behältermittelachse, vor den Verfahrensschritten Aufbrechen und Verformen,
- Figur 6: Ansicht des Behälterbodens in Richtung der Behältermittelachse, nach den Verfahrensschritten Aufbrechen und Verformen, und
- Figur 7: Schnitt in Richtung der Behältermittelachse durch den Bodenbereich, nach den Verfahrenschritten Aufbrechen und Verformen. (Einzelheit X aus Figur 1)

Nachfolgend sind gleiche Teile mit denselben Bezugszeichen versehen.

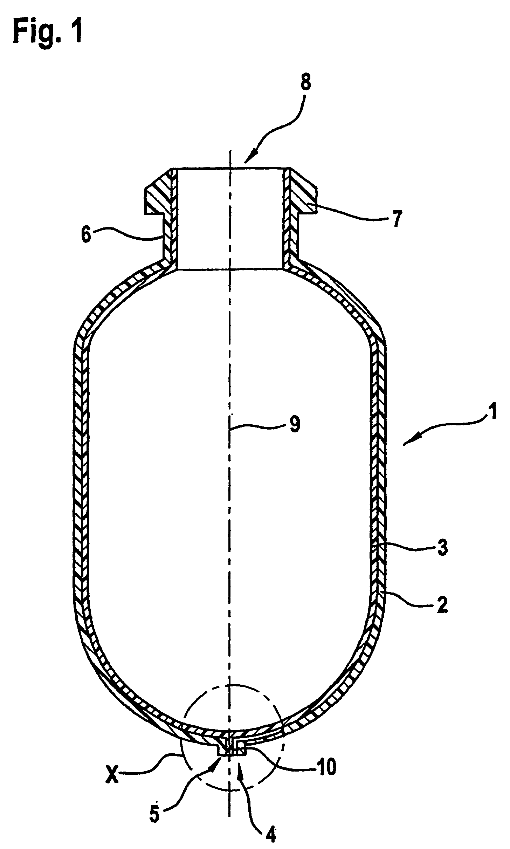

Figur 1 zeigt einen Schnitt durch ein Ausführungsbeispiel des Behälters 1 in Richtung der Behältermittelachse 9. Der Behälter, der aus einem Außenbehälter 2 und einem Innenbeutel 3 besteht, ist im vorliegenden Ausführungsbeispiel flaschenförmig ausgebildet. Er weist an seinem Flaschenhals 6 einen Vorsprung 7 aus, der an dem Ende des Flaschenhalses 6 angeordnet ist, an dem sich die Behälteröffnung 8 befindet. Im Bodenbereich 4 des Behälters 1 ist in der Verlängerung der Behältermittelachse 9 die Bodennaht 5 angeordnet um die zu ihr gehörende Druckausgleichsöffnung 10. Anschaulich dargestellt ist, daß der Vorsprung 7 ausschließlich aus Material des Außenbehälters 2 geformt ist.

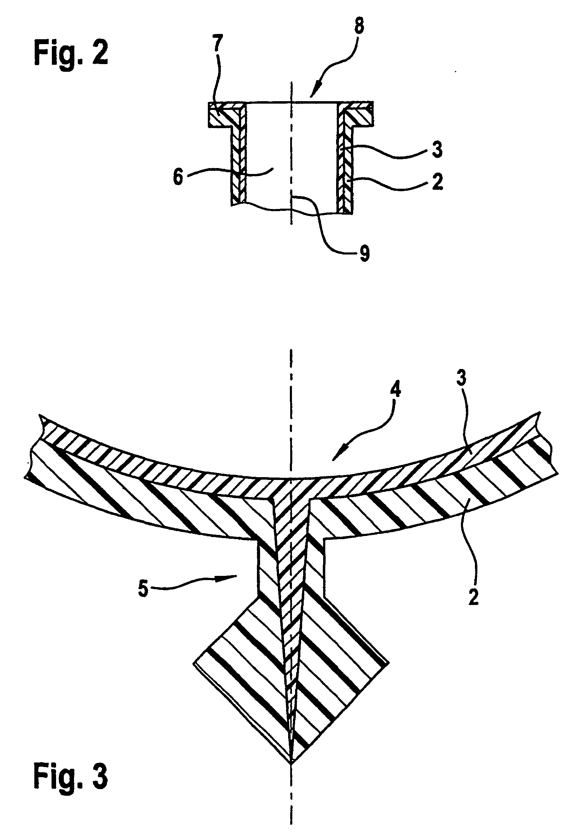

Figur 2 zeigt einen Schnitt in Richtung der Behältermittelachse 9 durch den Flaschenhals 6 eines zweiten Ausführungsbeispieles des Behälters. Der Flaschenhals 6 weist auf seiner zur Behälteröffnung 8 hin gerichteten Stirnfläche einen rechteckförmigen Vorsprung 7 auf. Im Gegensatz zu dem in Fig. 1 dargestellten Ausführungsbeispiel weist der rechteckige Vorsprung 7 die Besonderheit auf, daß er sowohl aus Material des Außenbehälters 2 als auch aus Material des Innenbeutels 3 geformt ist, so daß der Innenbeutel 3 zusätzlich zur Fixierung im Bodenbereich auch im Bereich des Flaschenhalses 6 besonders fixiert ist.

Figur 3 zeigt einen Schnitt durch den Bodenbereich 4 und der hier angeordneten Bodennaht 5 nach dem Blasvorgang, aber vor dem Schneidvorgang. Die Bodennaht 5, die durch Abquetschen von Überschußmaterial mit Hilfe der beiden Blasformhälften entsteht, hat nach dem eigentlichen Formgebungsprozeß die Form eines Drachenschwanzes. Der Innenbeutel 3 ist im Bereich der Bodennaht 5 zwischen den Wandungen des Außenbehälters 2 eingeklemmt.

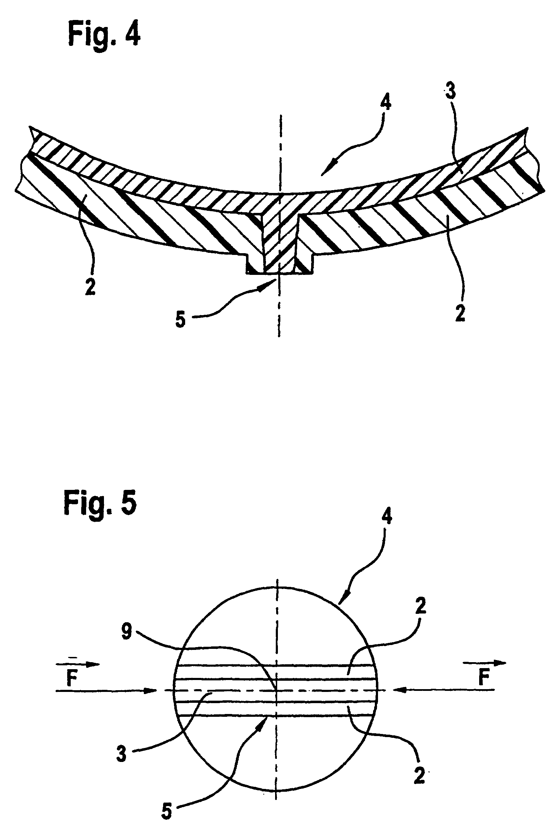

Figur 4 zeigt einen Schnitt durch den Bodenbereich 4 und der hier angeordneten Bodennaht 5 nach Durchführung des Schneidevorganges, bei dem die Bodennaht 5 zum Teil abgeschnitten wurde.

Figur 5 zeigt eine Ansicht des Bodenbereiches mit Blick in Richtung der Behältermittelachse 9 nachdem die Bodennaht 5 zum Teil abgeschnitten wurde. Deutlich zu erkennen ist der Aufbau der Bodennaht 5, die mittig aus den Wandungen des Innenbeutels 3 gebildet und auf beiden Seiten von den Wandungen des Außenbehälters 2 begrenzt wird. Eingezeichnet sind auch die radialen, in Nahtrichtung wirkenden Kräfte F, die in den Bodenbereich 4 eingeleitet werden, um die Bodennaht 5 aufzubrechen und den Außenbehälter 2 zu verformen. Eine optional einzuleitende, axiale Kraft ist im vorliegenden Ausführungsbeispiel nicht eingezeichnet bzw. nicht vorgesehen.

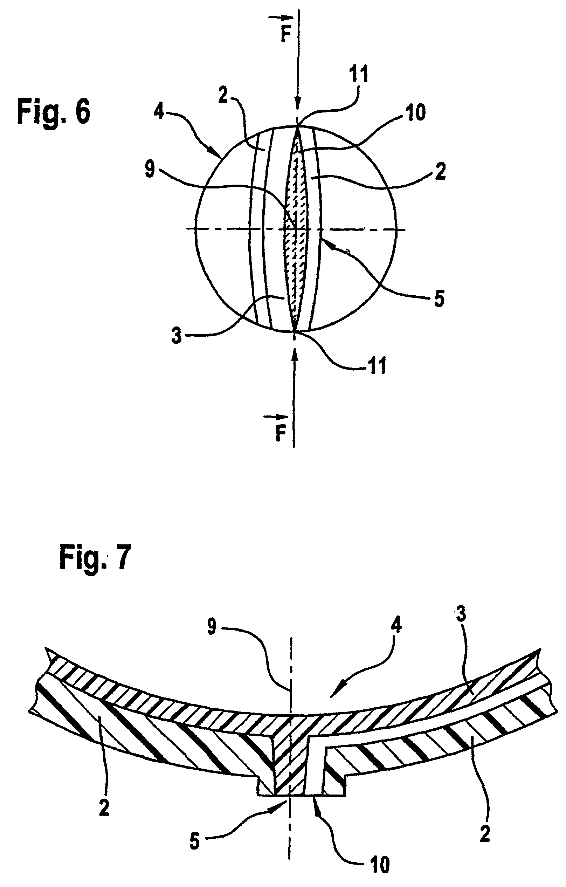

Figur 6 zeigt eine Ansicht des Bodenbereiches 4 mit Blick in Richtung der Behältermittelachse 9 und der im Bodenbereich 4 angeordneten Bodennaht 5, unter der Einwirkung der radialen, in Nahtrichtung wirkenden Kräfte F. Anschaulich dargestellt ist, wie sich der Behälter durch Einleiten der Kräfte verformt und die Bodennaht 5 aufbricht, so daß eine Druckausgleichsöffnung 10 ausgebildet wird. In dem hier vorliegenden, speziellen Ausführungsbeispiel. bleibt der Innenbeutel 3 auf einer Seite der Bodennaht 5 am Außenbehälter 2 und den Enden der Bodennaht 11 haften und ist dadurch axial fixiert. Auf der gegenüberliegenden Seite erfolgt die Ausbildung der Druckausgleichsöffnung 10, die durch den Außenbehälter 2 und den Innenbeutel 3 begrenzt wird und somit einen zwischen Innenbeutel 3 und Außenbehälter 2 bestehenden Druckunterschied ausgleichen kann.

Figur 7 zeigt einen Schnitt in Richtung der Behältermittelachse 9 durch den Bodenbereich 4 und die in diesen angeordnete Bodennaht 5. Deutlich zu erkennen ist die Druckausgleichsöffnung 10 zwischen Innenbeutel 3 und Außenbehälter 2.

### Bezugszeichenliste

- 1: Behälter
- 2: Außenbehälter
- 3: Innenbeutel
- 4: Bodenbereich
- 5: Bodennaht
- 6: Flaschenhals
- 7: Vorsprung
- 8: Behälteröffnung
- 9: Behältermittelachse
- 10: Druckausgleichsöffnung
- 11: Enden der Bodennaht

## Patentansprüche

1. Verfahren zur Herstellung eines mit einer Behälteröffnung (8) versehenen Behälters (1) mit einem im wesentlichen formsteifen Außenbehälter (2) und einem in diesem angeordneten, mit dem späteren Behälterinhalt in Kontakt befindlichen Innenbeutel (3) aus jeweils verschiedenartigen, keine Verbindung miteinander eingehenden, thermoplastischen Kunststoffen, und einer einen zwischen Außenbehälter (2) und Innenbeutel (3) bestehenden Druckunterschied ausgleichenden und in dem Außenbehälter (2) angeordneten Druckausgleichsöffnung (10), wobei zunächst ein Vorformling, bestehend aus zwei koaxialen Schläuchen, die eine für die Herstellung des Behälters ausreichenden Länge aufweisen, im Koextrusionsblasverfahren zwischen den geöffneten Hälften der Blasform erzeugt wird, die Blasform geschlossen wird und dabei unter Ausbildung einer nach außen hervorstehenden Bodennaht (5) das ÜberschuBmaterial im Bodenbereich (4) des herzustellenden Behälters abgequetscht wird, in der Art, daß im Nahtbereich das in Kontakt befindliche Material des Außenbehälters (2) miteinander verschweißt wird, daß zwischen den Wandabschnitten des Außenbehälters (2) der den Innenbeutel (3) bildende Schlauch eingeklemmt, axial fixiert und verschweißt wird, und der Innenbeutel (3) so mit Druck beaufschlagt wird, daß der Vorformling sich mit seinen Wandungen von innen an die Kontur der Blasform anlegt, **dadurch gekennzeichnet, daß** beim Schließen der Blasform und der damit verbundenen Ausbildung der Bodennaht (5) die Naht des Innenbeutels (3) axial in der Naht des Außenbehälters zumindest teilweise fixiert wird und mindestens eine Druckausgleichsöffnung (10) dadurch ausgebildet wird, daß die Bodennaht (5) im Anschluß an die Formgebung mindestens teilweise abgeschnitten wird und eine radiale, in Nahtrichtung wirkende Kraft im Bodenbereich (4) eingeleitet wird, in der Art, daß die Bodennaht (5) aufbricht, wobei die Temperatur des Vorformlings beim Abschneiden der Bodennaht (5) zwischen 40° C und 70° C liegt und der Außenbehälter (2) noch in gewissem Umfang plastisch verformbar ist, so daß die durch die Kraft verursachte Verformung eine bleibende Verformung ist und nicht durch elastische Rückstellung aufgehoben wird.

2. Verfahren nach Anspruch 1, **dadurch gekennzeichnet, daß** nach dem zumindest teilweise Abschneiden der Bodennaht und vor dem Einleiten der radialen Kraft kurzzeitig eine axiale, im wesentlichen zur Längsachse des Behälters parallel wirkende Kraft eingeleitet wird, in der Art, daß die Bodennaht zumindest teilweise aufbricht.

3. Verfahren nach Anspruch 2, **dadurch gekennzeichnet, daß** die axiale Kraft in Form eines Stoßes eingeleitet wird.

4. Verfahren nach einem der vorherigen Ansprüche, **dadurch gekennzeichnet, daß** die Herstellung des Behälters ohne Ausbildung einer Schulternaht in Form einer Quetschnaht erfolgt.

5. Verfahren nach einem der vorherigen Ansprüche, **dadurch gekennzeichnet, daß** beim Aufbrechen der Bodennaht (5) das den Innenbeutel (3) bildende Material auf einer Seite der Bodennaht (5) an dem Außenbehälter (2) und den Enden der Bodennaht (11) haften bleibt, wodurch eine axiale Fixierung aufrechterhalten wird.

6. Verfahren nach einem der vorherigen Ansprüche, **dadurch gekennzeichnet, daß** die Bodennaht (5) des Außenbehälters (2) nur teilweise aufgebrochen wird und die Naht des Innenbeutels (3) durch den nicht aufgebrochenen Teil der Bodennaht des Außenbehälters (2) fixiert ist.

7. Verfahren nach einem der vorherigen Ansprüche, **dadurch gekennzeichnet, daß** das Abschneiden der Bodennaht (5) und das Einleiten der den Außenbehälter (2) öffnenden und bleibend verformenden Kraft gleichzeitig in einem Arbeitsgang geschieht.

8. Verfahren nach einem der Ansprüche 1 bis 6, **dadurch gekennzeichnet, daß** das Abschneiden der Bodennaht (5) und das Einleiten der den Außenbehälter (2) öffnenden und bleibend verformenden Kraft getrennt in separaten Arbeitsgängen geschieht.

9. Verfahren nach einem der vorherigen Ansprüche, **dadurch gekennzeichnet, daß** das Abschneiden der Bodennaht (5) und das Einleiten der den Außenbehälter (2) öffnenden und bleibend verformenden Kraft auf der Kunststoffblasmaschine erfolgt.

10. Verfahren nach Anspruch 9, **dadurch gekennzeichnet, daß** der Behälter (1) sich noch innerhalb der Blasform befindet.

11. Verfahren nach einem der Ansprüche 1 bis 8, **dadurch gekennzeichnet, daß** das Abschneiden der Bodennaht (5) und das Einleiten der den Außenbehälter (2) öffnenden und bleibend verformenden Kraft auf einer sich der Kunststoffblasmaschine anschließenden Maschine erfolgt.

12. Verfahren nach einem der vorherigen Ansprüche, **dadurch gekennzeichnet, daß** der Behälter (1) flaschenförmig ausgebildet wird.

13. Verfahren nach Anspruch 12, **dadurch gekennzeichnet, daß** der Innenbeutel (3) zusätzlich zur Fixierung im Bodenbereich (4) auch im Bereich des Flaschenhalses (6) fixiert wird

14. Verfahren nach Anspruch 13, **dadurch gekennzeichnet, daß** der Innenbeutel (3) bei Ausbildung des Flaschenhalses (6) zumindestens teilweise in den Wandungen des Außenbehälters (2) eingeklemmt wird.

15. Verfahren nach einem der Ansprüche 12 bis 14, **dadurch gekennzeichnet, daß** der Flaschenhals (6) mit einem an seiner Stirnseite nach außen in radiale Richtung hervorragenden Vorsprung (7) ausgebildet wird.

16. Verfahren nach Anspruch 15, **dadurch gekennzeichnet, daß** der Innenbeutel (3) im Bereich des Vorsprunges (7) durch einen Teil einer stehenden oder liegenden Falz mit dem Außenbehälter (2) verbunden wird.

17. Verfahren nach Anspruch 15, **dadurch gekennzeichnet, daß** der Vorsprung (7) ausschließlich aus Material des Außenbehälters (2) geformt wird.

18. Ein Behälter (1) mit einer Behälteröffnung (8) im wesentlichen bestehend aus einem formsteifen Außenbehälter (2) und einem in diesem angeordneten, mit dem späteren Behälterinhalt in Kontakt befindlichen Innenbeutel (3) vorzugsweise hergestellt nach dem Verfahren nach einem der Ansprüche 1 bis 17, **dadurch gekennzeichnet, daß** mindestens eine Druckausgleichsöffnung (10) im Bodenbereich (4) angeordnet ist und durch zumindest teilweises Abschneiden der beim Formgebungsprozeß entstandenen Bodennaht (5) entsteht und beim Aufbrechen und Verformen der Bodennaht (5) durch Einleiten einer radialen, in Nahtrichtung wirkenden Kraft das den Innenbeutel (3) bildende Material auf einer Seite der Bodennaht (5) an dem Außenbehälter (2) und den Enden der Naht haften bleibt, wodurch sich eine axiale Fixierung des Innenbeutels (3) ergibt und gleichzeitig mindestens eine Druckausgleichsöffnung (10) zwischen der Außenseite des Innenbeutels (3) und der Innenseite des Außenbehälters (2) gebildet wird, die für einen ständigen Druckausgleich sorgt.

19. Behälter nach Anspruch 18, **dadurch gekennzeichnet, daß** der Behälter (1) flaschenförmig ausgebildet ist.

20. Behälter nach Anspruch 19, **dadurch gekennzeichnet, daß** der Innenbeutel (3) zusätzlich zur Fixierung im Bodenbereich (4) auch im Bereich des Flaschenhalses (6) fixiert ist.

21. Behälter nach Anspruch 20, **dadurch gekennzeichnet, daß** der Innenbeutel (3) im Bereich des Flaschenhalses (6) zumindest teilweise in den Wandungen des Außenbehälters (2) eingeklemmt ist.

22. Behälter nach einem der Ansprüche 19 bis 21, **dadurch gekennzeichnet, daß** der Flaschenhals (6) einen an seiner Stirnseite nach außen in radiale Richtung hervorragenden Vorsprung (7) aufweist.

23. Behälter nach Anspruch 22, **dadurch gekennzeichnet, daß** die Verbindung des Innenbeutels (3) mit dem Außenbehälter (2) zumindest teilweise im Bereich des Vorsprunges (7) liegt und als ein Teil einer stehenden oder liegenden Falz ausgebildet ist.

24. Behälter nach Anspruch 22, **dadurch gekennzeichnet, daß** der Vorsprung (7) ausschließlich aus Material des Außenbehälters (2) geformt ist.

## Claims

1. A process for production of a container (1) provided with a container opening (8), having a substantially rigid outer container (2) and an inner bag (3) disposed therein, which is in contact with the subsequent container contents, these respectively comprising different thermoplastic plastics which are not bonded to each other, and a pressure equalisation opening (10), disposed in the outer container (2), which equalises a pressure difference between the outer container (2) and the inner bag (3), wherein a preliminary moulding, comprising two coaxial tubes which have a sufficient length for manufacture of the container, is first produced by co-extrusion between the opened halves of the blow mould, the blow mould is closed and while an outwardly-projecting base seam (5) is formed, the excess material in the base area (4) of the container that is to be manufactured is squeezed out in such a way that the material of the outer container (2) which is in contact in the area of the seam is welded together, the tube which forms the inner bag is clamped, axially fixed and welded between the wall sections of the outer container (2) and the inner bag (3) is subjected to pressure such that the walls of the preliminary moulding lie against the contours of the blow mould from inside, **characterised in that** on closing the blow mould and with the associated formation of the base seam (5), the seam of the inner bag (3) is at least partially fixed axially in the seam of the outer container and at least one pressure equalisation opening (10) is formed by the fact that the base seam (5) is at least partially cut off after shaping and a radial force which acts in the direction of the base seam is exerted in the base area (4) in such a way that the base seam (5) breaks open, the temperature of the pre-moulding being between 40° C and 70° C when the base seam (5) is cut off and the outer container (2) is still plastically deformable to some degree, so that the deformation produced by the force is a permanent deformation which is not reversed by elastic restoration.

2. A process according to claim 1, **characterised in that** after the base seam (5) has been at least partially cut off and before the introduction of a radial force, an axial force which is exerted substantially parallel to the longitudinal axis of the container is briefly introduced in such a way that the base seam at least partially breaks open.

3. A process according to claim 2, **characterised in that** the axial force is introduced in the form of a blow.

4. A process according to one of the preceding claims, **characterised in that** the production of the container takes place without the formation of a shoulder seam in the form of a squeeze seam.

5. A process according to one of the preceding claims, **characterised in that** when the base seam (5) is broken open, the material which forms the inner bag (3) remains stuck, on one side of the base seam (5), to the outer container (2) and the ends of the base seam (11), thereby maintaining axial fixing.

6. A process according to one of the preceding claims, **characterised in that** the base seam (5) of the outer container (2) is only partially broken open and the seam of the inner bag (3) is fixed by the unbroken part of the base seam of the outer container (2).

7. A process according to one of the preceding claims, **characterised in that** cutting off the base seam (5) and application of the force which opens and permanently deforms the outer container (2) occur simultaneously in one work step.

8. A process according to claims 1 to 6, **characterised in that** cutting off the base seam (5) and application of the force which opens and permanently deforms the outer container (2) occur separately in separate work steps.

9. A process according to one of the preceding claims, **characterised in that** cutting off the base seam (5) and application of the force which opens and permanently deforms the outer container (2) take place on the plastic blowing machine.

10. A process according to claim 9, **characterised in that** the container (1) is still within the blow mould.

11. A process according to one of claims 1 to 8, **characterised in that** cutting off the base seam (5) and application of the force which opens and permanently deforms the outer container (2) take place on a machine which is attached to the plastic blowing machine.

12. A process according to one of the preceding claims, **characterised in that** the container (1) is configured in the shape of a bottle.

13. A process according to claim 12, **characterised in that** the inner bag (3) is also fixed in the area of the bottle neck (6) in addition to the fixing in the base area (4).

14. A process according to claim 13, **characterised in that** the inner bag (3) is at least partially clamped in the wall of the outer container (2) during forming of the bottle neck (6).

15. A process according to one of claims 12 to 14, **characterised in that** the bottle neck (6) is configured with a projection (7) on its end face extending outwards in the radial direction.

16. A process according to claim 15, **characterised in that** the inner bag (3) is connected to the outer container (2) by means of an upright or horizontal fold in the area of the projection (7).

17. A process according to claim 15, **characterised in that** the projection (7) is exclusively formed from material of the outer container (2).

18. A container (1) with a container opening (8) substantially comprising a rigid outer container (2) and an inner bag (3) disposed therein, which is in contact with the subsequent contents of the container, preferably produced according to one of claims 1 to 17, **characterised in that** at least one pressure equalisation opening (10) is disposed in the base area (4) and is produced by the base seam (5), which is formed during the moulding process, being at least partially cut off and on breaking open and deforming of the base seam (5) by the introduction of a radial force acting in the direction of-the seam, the material which forms the inner bag (3) remaining stuck, on one side of the base seam (5), to the outer container (2) and the ends of the seam, thereby axially fixing the inner bag (3), and at the same time at least one pressure equalisation opening (10) is formed between the outside of the inner bag (3) and the inside of the outer container (2) which provides constant pressure equalisation.

19. A container according to claim 18, **characterised in that** the container (1) is bottle-shaped.

20. A container according to claim 19, **characterised in that** the inner bag (3) is also fixed in the area of the bottle neck (6) in addition to the fixing in the base area (4).

21. A container according to claim 20, **characterised in that** the inner bag (3) is at least partially clamped in the wall of the outer container (2) in the region of the bottle neck (6).

22. A container according to one of claims 19 to 21, **characterised in that** the bottle neck (6) has a projection (7) on its end face extending outwards in the radial direction.

23. A container according to claim 22, **characterised in that** the connection of the inner bag (3) with the outer container (2) is at least partially located in the area of the projection (7) and takes the form of part of an upright or horizontal fold.

24. A container according to claim 22, **characterised in that** the projection (7) is exclusively formed from material of the outer container (2).

## Revendications

1. Procédé pour la fabrication d'un conteneur (1) pourvu d'une ouverture (8), comprenant un conteneur extérieur (2) à forme sensiblement rigide et une poche intérieure (3) agencée dans celui-ci est situé en contact avec le contenu ultérieur du conteneur, qui sont en matières thermoplastiques respectivement différentes qui n'établissent pas entre elles de liaison, et une ouverture d'équilibrage de pression (10) agencée dans le conteneur extérieur (2) et équilibrant une différence de pression existante entre le conteneur extérieur (2) et la poche intérieure (3), procédé dans lequel une ébauche, constituée de deux tuyaux coaxiaux qui présentent une longueur suffisante pour la production du conteneur, est engendrée par un procédé de soufflage-coextrusion entre les moitiés ouvertes du moule de soufflage, le moule de soufflage est fermé et de ce fait, le matériau excédentaire dans la région (4) au fond du conteneur à fabriquer est écrasé en formant une jointure de fond (5) qui fait saillie vers l'extérieur, de telle manière que dans la zone de la jointure le matériau du conteneur extérieur (2) est conjointement soudé, que le tuyau qui forme la poche intérieure (3) est coincé, axialement fixé et soudé entre les tronçons de paroi du conteneur extérieur (2), et la poche intérieure (3) est mise sous pression de telle manière que l'ébauche s'applique par ses parois depuis l'intérieur contre le contour du moule de soufflage, **caractérisé en ce que** lors de la fermeture du moule de soufflage et de la réalisation de la jointure de fond (5) qui s'ensuit, la jointure de la poche intérieure (3) est au moins partiellement fixée dans la jointure du conteneur extérieur, et au moins une ouverture d'équilibrage de pression (10) est réalisée par le fait que la jointure de fond (5) est au moins partiellement découpée à la suite de la mise en forme et une force radiale agissant dans la direction de la jointure est appliquée dans la région du fond (4) de telle manière que la jointure de fond (5) est rompue, et de sorte que la température de l'ébauche lors de la découpe de la jointure de fond (5) est située entre 40 °C et 70 °C et que le conteneur extérieur (2) est encore plastiquement déformable dans une certaine mesure, de sorte que la déformation provoquée par la force est une déformation permanente qui n'est pas annulée par un retour élastique.

2. Procédé selon la revendication 1, **caractérisé en ce que**, après la découpe au moins partielle de la jointure de fond, et avant d'appliquer la force radiale, on applique brièvement une force axiale qui agit essentiellement parallèlement à l'axe longitudinal du conteneur, de manière à rompre au moins partiellement la jointure de fond.

3. Procédé selon la revendication 2, **caractérisé en ce que** la force axiale est appliquée sous la forme d'un coup.

4. Procédé selon l'une des revendications précédentes, **caractérisé en ce que** la fabrication du conteneur a lieu sans réaliser de jointure d'épaulement sous la forme d'une jointure écrasée.

5. Procédé selon l'une des revendications précédentes, **caractérisé en ce que** lors de la rupture de la jointure de fond (5) le matériau qui forme la poche intérieure (3) reste collé d'un côté de la jointure de fond (5) contre le conteneur extérieur (2) et contre les extrémités de la jointure de fond (11), grâce à quoi on maintient une fixation axiale.

6. Procédé selon l'une des revendications précédentes, **caractérisé en ce que** la jointure de fond (5) du conteneur extérieur (2) est partiellement rompue, et la jointure de la poche intérieure (3) est fixée par la partie non rompue de la jointure de fond du conteneur extérieur (2).

7. Procédé selon l'une des revendications précédentes, **caractérisé en ce que** la découpe de la jointure de fond (5) et l'application de la force qui ouvre le conteneur extérieur (2) et qui le déforme de façon permanente ont lieu simultanément en une passe de travail.

8. Procédé selon l'une des revendications 1 à 6, **caractérisé en ce que** la découpe de la jointure de fond (5) et l'application de la force qui ouvre le conteneur extérieur (2) et qui le déforme de façon permanente ont lieu séparément dans des passes de travail séparées.

9. Procédé selon l'une des revendications précédentes, **caractérisé en ce que** la découpe de la jointure de fond (5) et l'application de la force qui ouvre le conteneur extérieur (2) et qui le déforme de façon permanente ont lieu sur la machine de soufflage de matière plastique.

10. Procédé selon la revendication 9, **caractérisé en ce que** le conteneur (1) se trouve encore à l'intérieur du moule de soufflage.

11. Procédé selon l'une des revendications 1 à 8, **caractérisé en ce que** la découpe de la jointure de fond (5) et l'application de la force qui ouvre le conteneur extérieur (2) et qui le déforme de façon permanente ont lieu sur une machine qui fait suite à la machine de soufflage de matière plastique.

12. Procédé selon l'une des revendications précédentes, **caractérisé en ce que** le conteneur (1) est réalisé en forme de bouteille.

13. Procédé selon la revendication 12, **caractérisé en ce que** la poche intérieure (3) est fixée également dans la région du goulot de bouteille (6), en supplément de la fixation dans la zone de fond (4).

14. Procédé selon la revendication 13, **caractérisé en ce que** la poche intérieure (3) est au moins partiellement coincée dans les parois du conteneur extérieur (2) lors de la formation du goulot de bouteille (6).

15. Procédé selon l'une des revendications 12 à 14, **caractérisé en ce que** le goulot de bouteille (6) est réalisé avec une saillie (7) qui dépasse sur sa face frontale vers l'extérieur en direction radiale.

16. Procédé selon la revendication 15, **caractérisé en ce que** la poche intérieure (3) est reliée, dans la zone de la saillie (7), au conteneur extérieur (2) par une partie d'un pli dressé ou couché.

17. Procédé selon la revendication 15, **caractérisé en ce que** la saillie (7) est exclusivement formée à partir du matériau du conteneur extérieur (2).

18. Conteneur (1) comportant une ouverture (8), essentiellement constitué d'un conteneur extérieur (2) à forme rigide, et d'une poche intérieure (3) agencée dans celui-ci et se trouvant en contact avec le contenu ultérieur du conteneur, réalisé de préférence selon le procédé de l'une des revendications 1 à 17, **caractérisé en ce qu'**au moins une ouverture d'équilibrage de pression (10) est agencée dans la région de fond (4) et est réalisée par découpe au moins partielle de la jointure de fond (5) qui apparaît lors du processus de mise en forme, et par rupture et par déformation de la jointure de fond (5) par application d'une force radiale agissant dans la direction de la jointure, le matériau qui constitue la poche intérieure (3) reste collé d'un côté de la jointure de fond (5) contre le conteneur extérieur (2) et contre les extrémités de la jointure, grâce à quoi il en résulte une fixation axiale de la poche intérieure (3), et au moins une ouverture d'équilibrage de pression (10) est simultanément formée entre le côté extérieur de la poche intérieure (3) et le côté intérieur du conteneur extérieur (2), laquelle assure un équilibrage de pression permanent.

19. Conteneur selon la revendication 18, **caractérisé en ce que** le conteneur (1) est réalisé en forme de bouteille.

20. Conteneur selon la revendication 19, **caractérisé en ce que** la poche intérieure (3) est également fixée dans la région du goulot de bouteille (6), en supplément de la fixation dans la zone de fond (4).

21. Conteneur selon la revendication 20, **caractérisé en ce que** la poche intérieure (3) est au moins partiellement coincée dans les parois du conteneur extérieur (2) dans la région du goulot de bouteille (6).

22. Conteneur selon l'une des revendications 19 à 21, **caractérisé en ce que** le goulot de bouteille (6) comporte une saillie (7) qui dépasse vers l'extérieur en direction radiale sur sa face frontale.

23. Conteneur selon la revendication 22, **caractérisé en ce que** la liaison de la poche intérieure (3) avec le conteneur extérieur (2) est située au moins partiellement dans la région de la saillie (7), et est réalisée sous forme d'une partie d'un pli dressé ou couché.

24. Conteneur selon la revendication 22, **caractérisé en ce que** la saillie (7) est exclusivement formée à partir du matériau du conteneur extérieur (2).
